# EUROPEAN PATENT APPLICATION

(11) **EP 2 284 313 A1**
(43) Date of publication of application: **16.02.2011**
(21) Application number: 10250984.1
(22) Date of filing: 27.05.2010
(51) Int. Cl.: D21B 1/32, D21F 9/00

(54) **Cleaning method of used paper recycling apparatus, cleaning system, and used paper recycling apparatus**

(30) Priority: 07.08.2009 JP 2009185290
(71) Applicant: Seed Co., Ltd., Osaka-shi Osaka (JP)
(72) Inventor: Tamai, Shigeru, Osaka-shi Osaka (JP); Koyama, Yuji, Osaka-shi Osaka (JP)
(74) Representative: Mounteney, Simon James

(57) **Abstract**

The present invention presents a cleaning technology in a used paper recycling apparatus capable of assuring a stable used paper recycling operation all the time, by removing and cleaning securely the used paper pulp remaining in the parts of the apparatus components of a used paper recycling apparatus of furniture size. The cleaning method of the cleaning system (CS) includes a white water cleaning process (A) of circulating white water (W) dewatered and collected in the paper making unit (4) for manufacturing regenerated paper (RP) from used paper pulp (UPP) in a pulp making unit (2) and a pulp concentration adjusting unit (3) of apparatus components for composing the used paper recycling apparatus (1) by a white water cleaning unit (220), and cleaning the pulp making unit (2) and the pulp concentration adjusting unit (3), and clean water cleaning processes (B), (C) of cleaning the paper making unit (4) by clean water (W) by a clean water cleaning unit (221). As a result, the used paper pulp (UPP) remaining in the parts of the apparatus components (2, 3, 4) can be securely cleaned and removed, and a stable used paper recycling operation can be assured all the time.

## Description

### BACKGROUND OF THE INVENTION

### Field of the Invention

The present invention relates to a cleaning method of used paper recycling apparatus, a cleaning system, and a used paper recycling apparatus, and more particularly to a cleaning technology in a used paper recycling apparatus of furniture size, installed at the site of origin of used paper, for recycling and processing into reusable paper at the site without discarding the generated used paper.

### Description of the Related Art

Used paper of various types such as used and unnecessary documents occurs not only in government offices or private companies, but also in daily life or general household. Used paper is usually discarded, incinerated, or disposed as refuse.

On the other hand, in the global concern about effective use of limited resources on earth, various technologies have been developed to regenerate and recycle the used paper being disposed and discarded so far.

Such used paper recycling technologies are mostly installed and executed in the paper making industry, and the used paper recycling plant requires, like the ordinary paper making plant, a vast land, an immense investment, and a huge quantity of water and chemicals for the purpose of high speed and mass production and high quality of recycled paper-.

For recycling of used paper, a tremendous manual labor is needed for collecting used paper, and used paper collection involves various problems, such as mixing of foreign matter by multiple garbage collectors, defective classification due to lack of knowledge about used paper recycling, and entry of harmful objects, and if used paper is collected, in order to regenerate by 100 percent as recycled paper, final checking by specialists and cleaning works are needed. On the other hand, confidential documents are not easily recycled and are mostly incinerated, and the recycling rate is low.

To solve these problems of used paper recycling, an effective method is the development of a technology capable of recycling at the site of origin of used paper, and from such point of view, a new system is developed and proposed by the present applicant, for example, in Japanese Patent Application Laid-Open No. 2007-308837 as a used paper recycling apparatus.

This used paper recycling apparatus is a realization of used paper recycling technology of large scale such as used paper recycling plant in a small size that can be installed in a small shop or a room in general household, and includes, in an apparatus case of furniture size, a pulp making unit for macerating and beating used paper to manufacture used paper pulp, a paper making unit for making recycled paper from the used paper pulp manufactured in this pulp making unit, and a control unit for driving and controlling the pulp making unit and the paper making unit in cooperation, in which the pulp making unit includes a paper making process unit for manufacturing wet paper from the used paper pulp sent from the pulp making unit, and a drying process unit for manufacturing regenerated paper by drying the wet paper manufactured in this paper making process unit, and these two process units are composed in a form of belt conveyor having a running belt for processing and conveying the used paper pulp.

The used paper is macerated and beaten in the pulp making unit to become used paper pulp, and then this used paper pulp is conveyed on the running belt of the belt conveyor in the paper making unit, and is filtered and dewatered, squeeze and dewatered, and heated and dried, and is formed into regenerated paper. In this case, in the stage of pulp, the used paper is decomposed to fiber level, and the printed characters and diagrams are completely decomposed and lost, and cannot be restored, so that leak or disclosure of confidential information or personal information composed in printed characters and diagrams can be securely prevented.

### BRIEF SUMMARY OF THE INVENTION

It is a primary object of the present invention to present a novel cleaning technology of a used paper recycling apparatus further improved from the conventional used paper recycling apparatus.

It is other object of the present invention to present a cleaning technology in a used paper recycling apparatus capable of cleaning the apparatus components composing the used paper recycling apparatus, cleaning and removing the used paper pulp securely remaining in the parts of the apparatus components, and assuring a stable operation of used paper recycling all the time.

To achieve these objects, the cleaning method of the used paper recycling apparatus of the present invention is a cleaning method of cleaning the apparatus components of the used paper recycling apparatus, which comprises, in an apparatus case of furniture size to be installed at the site of origin of the used paper, a pulp making unit for macerating and beating used paper to manufacture used paper pulp, a pulp concentration adjusting unit for adjusting the concentration of the used paper pulp manufactured in the pulp making unit, and a paper making unit for making recycled paper from the used paper pulp adjusted of the concentration in this pulp concentration adjusting unit, including a white water cleaning process of circulating the white water dewatered and collected in the paper making unit in the apparatus components, and cleaning the apparatus components, and a clean water cleaning process of cleaning the paper making unit by clean water.

Preferred embodiments include the following.
(1) The white water cleaning process is for circulating at least the white water in the pulp making unit and the pulp concentration adjusting unit, and cleaning the pulp making unit and the pulp concentration adjusting unit.
(2) In the white water cleaning process, the white water is circulated at least once in the pulp making unit and the pulp concentration adjusting unit.
(3) In the white water cleaning process, the white water used in the cleaning process is purified by paper making in the paper making unit, and then discharged.
(4) The clean water cleaning process includes a pulp supply unit cleaning process for cleaning the pulp supply unit for supplying the used paper pulp from the pulp concentration adjusting unit to the paper making net conveyor of the paper making unit, and a belt cleaning process for cleaning the mesh belt of the paper making net conveyor.
(5) The pulp supply unit cleaning process is for injecting clean water to an overflow part of an overflow weir of the pulp supply unit by injecting means.
(6) The belt cleaning process is for injecting clean water to the running mesh belt from the back side by injecting means.
(7) The mesh belt is formed as an endless belt rotating and running in a state being suspended and supported in an annular form, and in the belt cleaning process, the injecting means continues to inject clean water at least during a whole revolution of the mesh belt.
(8) The white water cleaning process and the clean water cleaning process are executed after completion of each used paper recycling operation.
(9) The white water cleaning process and the clean water cleaning process are executed after completion of one day' s used paper recycling operation of the used paper recycling apparatus.
(10) The white water cleaning process is executed after completion of each used paper recycling operation, and the clean water cleaning process is executed after completion of one day' s used paper recycling operation of the used paper recycling apparatus.

The cleaning system of the present invention is applied in a used paper recycling apparatus installed in an apparatus case of furniture size to be installed at the site of origin of the used paper, including a pulp making unit for macerating and beating used paper to manufacture used paper pulp, a pulp concentration adjusting unit for adjusting the concentration of the used paper pulp manufactured in the pulp making unit, and a paper making unit for making recycled paper from the used paper pulp adjusted of the concentration in this pulp concentration adjusting unit, and it is intended to clean the apparatus components of this used paper recycling apparatus, and includes white water cleaning means for circulating the white water dewatered and collected in the paper making unit in the apparatus components, and cleaning the apparatus components, and clean water cleaning means for cleaning the paper making unit by clean water.

Preferred embodiments include the following.
(1) The white water cleaning means is for circulating at least the white water in the pulp making unit and the pulp concentration adjusting unit, and cleaning the pulp making unit and the pulp concentration adjusting unit.
(2) The white water cleaning means includes a cleaning water supply water source for supplying cleaning water to the pulp making unit, a cleaning water circulation route for returning from the cleaning water supply water source to the supply water source by way of the pulp making unit and the pulp concentration adjusting unit, and a circulation pump provided in the cleaning water circulation route for circulating the cleaning water in the cleaning water circulation route, in which the cleaning water supply water source has a white water collection tank for collecting the white water filtered and dewatered in the paper making unit, and a water supply pump for supplying the white water in the white water collection tank to the pulp making unit as cleaning water.
(3) The clean water cleaning means includes pulp supply unit cleaning means for cleaning the pulp supply unit for supplying the used paper pulp from the pulp concentration adjusting unit to the paper making net conveyor of the paper making unit, and belt cleaning means for cleaning the mesh belt of the paper making net conveyor.
(4) The pulp supply unit cleaning means has first injecting means for injecting clean water to an overflow part of an overflow weir of the pulp supply unit.
(5) The belt cleaning means has second injecting means for injecting clean water to the running mesh belt from the back side.
(6) The configuration further includes cleaning control means for controlling the white water cleaning means and the clean water cleaning means by mutual interaction, and this cleaning control means is intended to control the white water cleaning means and the clean water cleaning means so as to execute the cleaning method described above.

The used paper recycling apparatus of the present invention includes, in an apparatus case of furniture size, a pulp making unit for manufacturing used paper pulp by macerating and beating used paper, a pulp concentration adjusting unit for adjusting the concentration of the used paper pulp manufactured in the pulp making unit, a paper making unit for making recycled paper from the used paper pulp adjusted of the concentration in this pulp concentration adjusting unit, and a control unit for driving and controlling the pulp making unit and the paper making unit in cooperation, and also includes the cleaning system for cleaning these apparatus components.

According to the cleaning method of the used paper recycling apparatus of the present invention, including a white water cleaning process of circulating the white water dewatered and collected in the paper making unit for manufacturing regenerated paper from used paper pulp in the apparatus components for composing the used paper recycling apparatus, and cleaning these apparatus components, and a clean water cleaning process of cleaning the paper making unit by clean water, the used paper pulp remaining in the parts of the apparatus components can be securely cleaned and removed, and the used paper recycling operation can be executed stably all the time.

That is, first using a large amount of white water used in the paper making operation effectively as cleaning water, it is circulated in the apparatus components including the pulp making unit for manufacturing used paper pulp by macerating and beating the used paper, and the pulp concentration adjusting unit for adjusting the concentration of the used paper pulp manufactured in this pulp making unit, and therefore the pulp making unit and the pulp concentration adjusting unit particularly consuming a huge amount of cleaning water can be cleaned efficiently and economically, and in succession by cleaning the paper making unit by clean water free from used paper pulp, the used paper pulp that cannot be removed by cleaning by white water only can be removed completely, thereby preventing inconveniences, such as drying of remaining used paper pulp to cause defective operations of the valves and pumps in the parts due to dried used paper pulp, or occurrence of concentration adjustment error due to remaining pulp, or other troubles.

In this case, by cleaning the pulp making unit and the pulp concentration adjusting unit particularly consuming a huge amount of cleaning water by using a large volume of white water, these apparatus components can be cleaned efficiently and economically.

Besides, by cleaning the pulp supply unit and the mesh belt of the paper making unit having a large influence on the paper making effect by using clean water such as tap water, regenerated paper of excellent paper quality can be constantly manufactured efficiently and economically.

As a result, it can be installed not only in a large office, but also in a small shop of general household room, and it is friendly to the environment, and low in running cost, and leak or disclosure of confidential information, personal information, and various information can be prevented securely, and a high confidentiality is assured, and a used paper recycling apparatus of furniture size capable of manufacturing regenerated paper of high quality stably can be realized.

These and other objects and features of the present invention will be appreciated by reading the detailed description made in conjunction with the accompanying drawings, and novel facts pointed out in the claims thereof.

### BRIEF DESCRIPTION OF THE DRAWINGS

Fig. 1 is a front sectional view of an overall outline configuration of a used paper recycling apparatus in a preferred embodiment of the present invention.
Fig. 2 is a side sectional view of an overall outline configuration of the same used paper recycling apparatus.
Fig. 3 is a circuit diagram of configuration of a used paper circulation route of a beating unit of the used paper recycling apparatus.
Fig. 4 is a block diagram of control configuration of a pulp concentration adjustment unit of the used paper recycling apparatus.
Fig. 5 is a perspective view of an overall outline configuration of a paper making unit of the used paper recycling apparatus.
Fig. 6 is a front view of a partial section of cleaning configuration in a paper making conveyor unit in the paper making unit.
Fig. 7 shows a cleaning configuration of the same paper making conveyor unit, in which Fig. 7 (a) is a plan view from line A-A direction of Fig. 6 showing a cleaning configuration of a pulp supply unit, and Fig. 7 (b) is a side view from line B-B direction of Fig. 7 showing a cleaning configuration of a paper making net belt.
Fig. 8 is an outline configuration diagram of an overall configuration of a cleaning system in the used paper recycling apparatus.
Fig. 9 is a flowchart showing the flow of cleaning process of the cleaning system.
Fig. 10 is a perspective view showing an outline configuration of the used paper recycling apparatus.

### DETAILED DESCRIPTION OF THE PREFERRED EMBODIMENT

A preferred embodiment of the present invention is specifically described below while referring to the accompanying drawings. Throughout the drawings, same reference numerals refer to same components or elements.

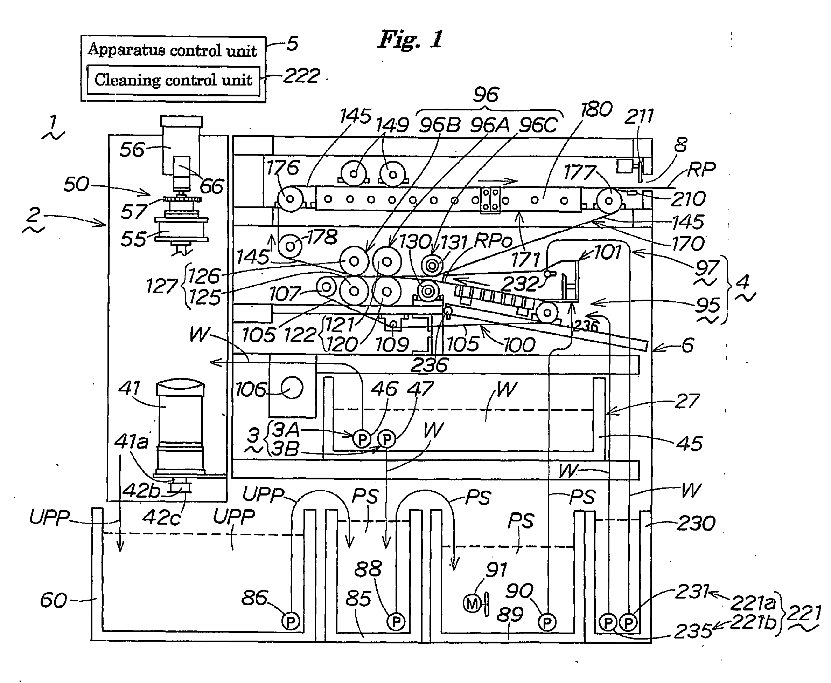

The used paper recycling apparatus of the present invention is shown in Fig. 1 to Fig. 10, and this used paper recycling apparatus 1 is specifically installed at the site of origin of used paper, and it is an apparatus for recycling into a re-usable paper at the site without discarding the generated used paper UP, and the used paper UP includes confidential documents of government offices or private companies, personal letters and others in the general household, and other used and unnecessary documents.

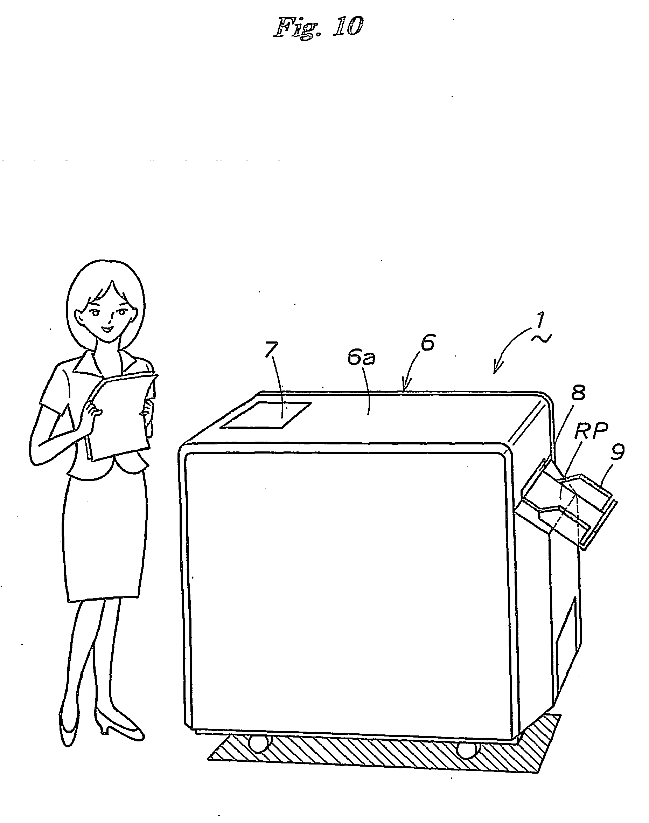

The used paper recycling apparatus 1 is a furniture size as shown in Fig. 10, that is, small in size and shape similar to furniture, such as document rack, locker, office desk, copier or personal computer used in an office, and mainly includes, as shown in Fig. 1, a pulp making unit 2, a pulp concentration adjustment unit 3, a paper making unit 4, an apparatus control unit (control unit) 5, and a cleaning system CS for cleaning these apparatus component units 2 to 4.

These apparatus component units 2 to 4 are built in a compact design to be installed in an apparatus case 6. The apparatus case 6 is a furniture size as mentioned above, and may be designed in specific dimensions and shapes appropriately depending on the purpose or application. The apparatus case 6 in the illustrated preferred embodiment is a rectangular box having dimensions and shapes similar to a copier installed and used in a general office, and the top plate of the apparatus case 6 has an inlet 7 which is opened and closed for supplying used paper UP, and a discharge port 8 is provided at the side for discharging regenerated paper RP, RP, .... At the lower edge portion of this discharge port 8, a regenerated paper receiving tray 9 is detachably provided for receiving regenerated paper RP, RP, ... discharged from the discharge port 8.

The pulp making unit 2 is a process location for manufacturing used paper pulp by macerating and beating, the used paper UP, and is composed of a macerating unit 20 for agitating, crushing and macerating the used paper UP, and a beating unit 21 for beating the used paper UP macerated in the macerating unit 20.

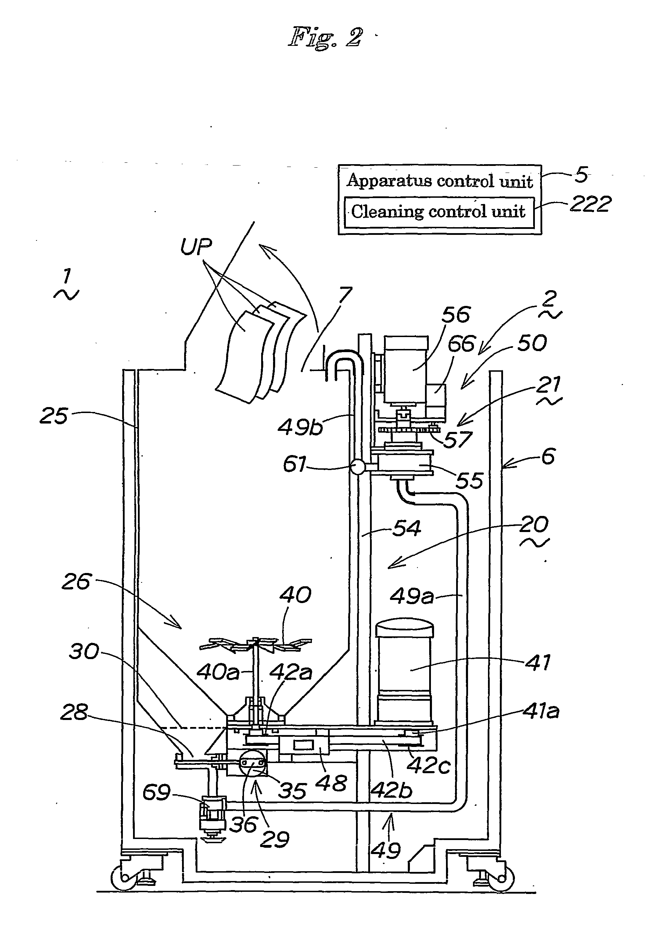

The macerating tank 25 has the inlet 7 formed in its ceiling wall as shown in Fig. 2 for charging and supplying the used paper UP, and a discharge port 28 is provided in its bottom wall for discharging the macerated used paper pulp UPP to the downstream side. The inner volume of the macerating tank 25 is determined depending on the number of sheets of used paper UP to be processed in batch. In the illustrated preferred embodiment, the macerating tank 25 has a capacity of agitating and treating (in batch) a total of about 500 sheets (about 2000 g) of used paper UP of A4 format PPC (plain paper copier) by adding about 98 liters of water. In this case, the concentration of the used paper pulp UPP to be macerated is about 2%. The concentration is adjusted by supplying water from the water feed device 27, and this water feed device 27 is a part of the pulp concentration adjusting unit 3 described below.

The inlet 7 has a structure to be opened and closed to the outside of a case cover 6a of the apparatus case 6. The discharge port 28 is opened and closed by an opening and closing valve 29, and communicates with a used paper pulp circulation route 49 described below. At the location of the discharge port 28, a debris filter 30 is provided for removing obstacles for the next beating process, such as clips, staples, pins and others used for binding the used paper UP, UP, ....

The opening and closing valve 29 opens and closes specifically by the crank motion of a crank mechanism 36 driven by a drive motor 35. The drive motor 35 is specifically an electric motor, and this drive motor 35 is electrically connected to the apparatus control unit 5.

The agitating device 26 is provided inside of the macerating tank 25, and includes an agitation impeller 40 and a drive motor 41.

The agitation impeller 40 has its rotation shaft 40a supported rotatably in an upright position in the central position of the bottom of the maceration tank 25, and is rotatable in the horizontal direction, and the lower end of the rotation shaft 40a is driven and coupled to a rotation shaft 41a of the drive motor 41 by way of transmission means 42 composed of a transmission pulley 42a, a transmission belt 42b, and a transmission pulley 42c.

The water feed device 27 is to supply water W into the macerating tank 25, and forms a beating concentration adjusting unit 3A of the pulp concentration adjusting unit 3 as described below.

The water feed device 27 in the illustrated preferred embodiment includes, as shown in Fig. 1, a white water collection tank 45, a water feed pump 46 for beating concentration adjustment, and a water feed pump 47 for paper making concentration adjustment. The white water collection tank 45 is, as described below, designed to collect white water W (pulp water of very low concentration filtered through a paper making mesh in the paper making process) filtered and dewatered in the paper making unit 4, and the white water W collected in the white water collection tank 45 is first supplied into the macerating tank 25 from the water feed pump 46, and then into a concentration adjustment tank 85 described below from the water feed pump 47.

The water feed device 27 functions also as a cleaning water supply source of the cleaning system CS as described below, and the both water feed pumps 46, 47 function also as water feed pumps for the cleaning system CS.

In the bottom of the macerating tank 25, a weight sensor 48 is provided, and the used paper UP, UP, ... and the water to be processed in batch in the macerating tank 25 are weighed and controlled, and the weight sensor 48 is electrically connected to the apparatus control unit 5.

The weight sensor 48 of the illustrated preferred embodiment is a load cell, and is designed to sense and measure the total weight of weight of macerating tank 25, and weight of used paper UP, UP, ... and water charged and supplied in the macerating tank 25.

The water supply source of the water feed device 27 is white water W dewatered in the paper making unit 4 to be collected in the white water collection tank 45, and in other words, the white water W dewatered and collected in the paper making unit 4 is totally fed back and re-used in the apparatus component units in the used paper recycling apparatus 1 specifically in a water circulation system consisting of the pulp making unit 2, the pulp concentration adjusting unit 3, and the cleaning system CS.

In the illustrated preferred embodiment, when the used paper UP of PPC of A4 format is charged into the macerating tank 25 by about maximum amount of 500 sheets (about 2000 g), it is noticed at this moment to the operator by sound and/or display, and when the inlet 7 is closed, about 98 liters of water is supplied into the water feed device 27, or when an arbitrary amount of used paper UP, UP, ... is charged (an amount smaller than the specified weight (number of sheets)), an amount of water corresponding to the charged weight of the used paper is supplied by the water feed device 27, and the concentration of the used paper pulp UPP to be macerated is controlled and adjusted to about 2%.

Thus, in the agitating device 26, the used paper UP, UP, ... charged into the macerating tank 25 from the charging opening of the apparatus case 6, that is, the inlet 7 are agitated and mixed for a specified time (10 to 20 minutes in the illustrated preferred embodiment) in the water supplied from the water feed device 27 by normal and reverse rotation of the agitation impeller 40 by the drive motor 41, and thereby the used paper UP, UP, ... are macerated and beaten into used paper pulp UPP.

The discharge port 28 of the macerating tank 25 is closed by the opening and closing valve 29 during operation of the macerating unit 20, and flow of used paper UP or used paper pulp UPP from the macerating tank 25 into the used paper pulp circulation route 49 is blocked, and the discharge port 28 is opened by the opening and closing valve 29 during operation of the beating unit 21 described later, and the flowing and circulating loop of the used paper pulp UPP from the macerating tank 25 into the used paper pulp circulation route 49 is allowed.

The beating unit 21 is a process location for beating the used paper UP macerated in the macerating unit 20, and is specifically designed to pressurize and beat the used paper UP macerated in the macerating unit 20, and to grind and pulverize (into micro-fibers) the inks forming characters and patterns on the used paper UP (printing inks forming characters and patterns on the used paper UP by various printing technologies, or inks forming characters and patterns on the used paper UP by pencil, ball-point pen, fountain pen, and other writing tools).

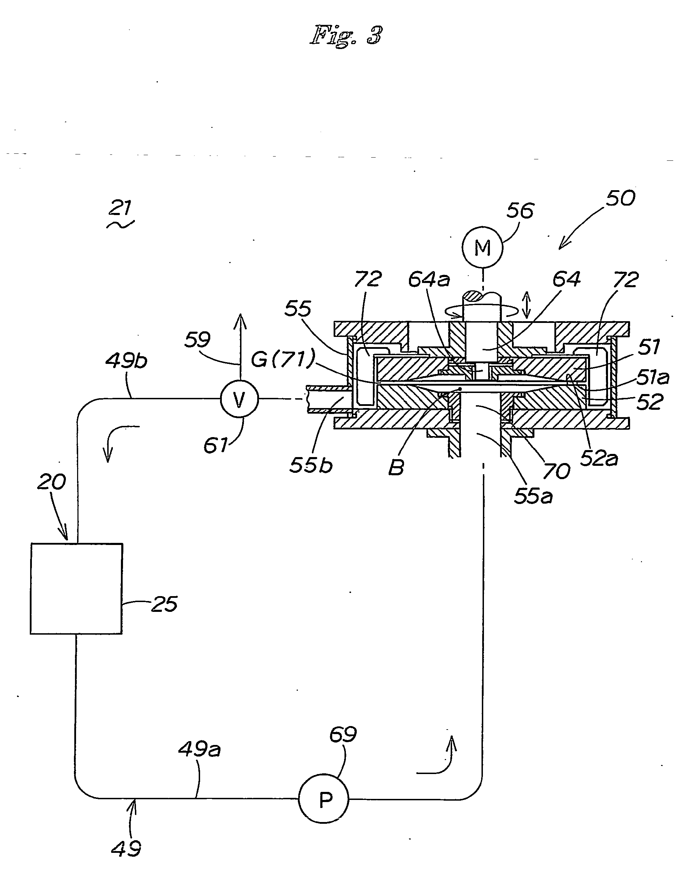

This beating unit 21 includes a grinder 50 as a principal component. This grinder 50 includes, as shown in Fig. 3, a pair of beating disks 51, 52 rotated and driven relatively, and the pair of beating disks 51, 52 have beating action surfaces 51a, 52a disposed oppositely and concentrically across a tiny beating gap G.

The beating gap G of the beating action surfaces 51a, 52a of the grinder 50 is determined so as to be narrowed gradually, as described below, from the grinder 50 in an initial period of beating process to the grinder 50 in a later period.

In the beating unit 21 of the present preferred embodiment, as shown in Fig. 3, the used paper pulp circulation route 49 having one grinder 50 is formed, and the used paper pulp UP is circulated and beaten for a specified time by way of the grinder 50 in a circulation system.

By execution of the beating process in the used paper pulp circulation route 49, in spite of the small and narrow process space in the apparatus case 6 of furniture size, a used paper pulp beating process route of basically infinite length not limited in length is formed, and the beating process space equally compared with the beating process of a large-scale apparatus is realized, and an optimum beating effect is obtained depending on the purpose.

Moreover, one grinder 50 carries out the whole beating process throughout the entire process of the beating process, and this one grinder 50 has the functions of a plurality of grinders from the grinder in an initial period of beating process to the grinder in a later period. More specifically, the beating gap G of the beating action surfaces 51a, 52a of the grinder 50 is controlled and adjusted so as to be narrower gradually from the initial period to the final period of the beating process.

The grinder 50 of the illustrated preferred embodiment is disposed, as shown in Fig. 2, adjacently to the macerating tank 25 of the macerating unit 20, on an apparatus machine body 54 composing the apparatus case 6, and as shown in Fig. 3, it further includes a beating tank 55 communicating with the macerating tank 25 of the macerating unit 20, the pair of beating disks 51, 52 provided relatively and rotatably in this beating tank 55, a rotation drive source 56 for relatively rotating the pair of beating disks 51, 52, and gap adjusting means 57 for adjusting the beating gap G of the pair of beating disks 51, 52.

The beating tank 55 is formed in a closed cylindrical shape for accommodating the pair of beating disks 51, 52, and has a supply port 55a for supplying the used paper pulp UPP from the upstream side, and a discharge port 55b for discharging the beaten used paper pulp UPP to the downstream side.

More specifically, the supply port 55a is opened in the center of the bottom of the beating tank 55 toward the vertical direction, and the discharge port 55b is opened at the cylindrical side of the beating tank 55 toward the horizontal direction. The supply port 55a and the discharge port 55b are connected to communicate with the macerating tank 25 of the macerating unit 20, respectively by way of circulation pipings 49a, 49b as shown in Fig. 3, and the discharge port 55b is further connected to communicate with a used paper pulp collection tank 60 by way of a discharge piping 59.

Reference numeral 61 shows a direction changeover valve, by the changeover operation of this direction changeover valve 61, the used paper pulp UPP discharged from the discharge port 55b is selectively returned to the macerating tank 25, or collected in the used paper pulp collection tank 60. The direction changeover valve 61 is specifically an electromagnetic valve, and is electrically connected to the apparatus control unit 5.

Of the pair of beating disks 51, 52, one is a fixed side beating disk fixed in the rotating direction, and other is a rotating side beating disk which is rotatable. In the illustrated preferred embodiment, the upper side beating disk 51 is the rotating side, and the lower side beating disk 52 is the fixed side, and the rotating side beating disk 51 of the upper side is disposed oppositely to the fixed side beating disk 52 of the lower side, concentrically and rotatably across a tiny beating gap G. The rotating side beating disk 51 is driven and coupled to a drive motor 56 by way of a rotation main shaft 64 pivoted rotatably to the fixed side of the apparatus machine body 54 and movably in the axial direction.

Although not shown specifically, the rotation main shaft 64 is rotatably pivoted on an elevating member of the gap adjusting means 57, and the rotating side beating disk 51 is concentrically and integrally attached at its leading end, and its base end part is driven and coupled integrally in the rotating direction and relatively movably in the axial direction on the rotation shaft of the drive motor 56.

The drive motor 56 is a rotation drive source, and relatively rotates the pair of beating disks 51, 52, and specifically an electric motor is used, and the drive motor 56 as its drive source is electrically connected to the apparatus control unit 5.

The opposite sides 51a, 52a of the both beating disks 51, 52 forming the tiny beating gap G mutually collaborate to form beating action surfaces. These opposite beating action surfaces 51a, 52a are formed as wheel sides having a multiplicity of abrasive grains bonded by a bonding agent. The both beating action surfaces 51a, 52a are, as shown in Fig. 3, formed in a taper shape continuously increased in the diameter size in the mutually opposite directions, and are formed as annular flat surfaces parallel to each other at the outermost peripheral edges, and these annular flat surfaces form the beating gap G.

In other words, in the pair of beating disks 51, 52, in the central position of the beating action surface 52a of the fixed side beating disk 52, an inlet 70 is formed to communicate coaxially with the supply port 55a of the beating tank, and the two annular flat surfaces formed on the outer peripheral edges of the beating action surfaces 51a, 52a of the pair of beating disks 51, 52 form an outlet 71 communicating with the discharge port 55b of the beating tank 55 and having the beating gap G.

On the outer circumference of the rotating side beating disk 51, a plurality of blades 72, 72, ... are formed at specified intervals in the circumferential direction, and these blades 72, 72, ... push out the used paper pulp UPP discharged from the outlet 71 in pumping action toward the discharge port 55b of the beating tank 55b by centrifugal force by rotation of the rotating side beating disk 51.

By the drive motor 56 as the drive source, when the rotating side beating disk 51 is rotated and driven to the fixed side beating disk 52, the used paper pulp UPP supplied into a beating space B by way of the supply port 55a of the beating tank 55 and the inlet 70 from the macerating tank 25 of the macerating unit 20 flows into the beating space B from the inlet 70, and passes through this beating space B, and is pressurized and beaten by the relatively rotating beating action surfaces 51a, 52a, and the inks forming the characters and patterns on the used paper UP are ground and pulverized, and then it is discharged by way of the discharge port 55b of the beating tank 55 from-the outlet 71.

At the time of discharge from this outlet 71, the used paper pulp UPP is further pressurized and beaten at the location of the outlet 71 having the beating gap G, and is pulverized to a specified micron size (to become micro-fiber) defined by this beating gap G.

In this regard, in the present preferred embodiment, as mentioned above, in the circulation system beating process disposing only one grinder 50 in the used paper pulp circulation route 49 (see Fig. 3), this one grinder 50 has the functions of a plurality of grinders from the grinder in an initial period of beating process to the grinder in a terminal period, and more specifically, the beating gap G of the grinder 50 is controlled and adjusted by the gap adjusting means 57 so as to be narrower gradually from the initial period to the final period of the beating process.

The gap adjusting means 57 is not particularly illustrated, but is designed to move the pair of beating disks 51, 52 relatively in the rotation axial direction, to control and adjust the beating gap G of these beating disks 51, 52, and is mainly composed of moving means (not shown) for moving the rotating side beating disk 51 in the rotation axial direction, that is, in the axial direction of a rotation main shaft 64, and a drive source 66 for driving this moving means. The drive source is specifically an electric motor, and this drive motor 66 is electrically connected to the apparatus control unit 5.

By the rotation of this electric motor 66, the rotating main shaft 64 is moved up and down by way of the moving means, and therefore the rotating side beating disk 51 formed integrally with the rotation main shaft 64 is moved in the vertical direction to the fixed side beating disk 52, that is, in the rotation axial direction, and the beating gap G between the two beating disks 51, 52 is controlled and adjusted.

For this purpose, a position detection sensor (not shown) is provided for detecting the ascending and descending position of the rotating side beating disk 51, and depending on the result of detection by this position detection sensor, the drive motor 66 is driven and controlled. The position detection sensor is electrically connected to the apparatus control unit 5.

The beating gap G of the beating disks 51, 52 is controlled and adjusted by the gap adjusting means 57 in the circulation system beating process by the used paper pulp circulation route 49 shown in Fig. 3, in mutual interaction with a circulation pump 69 which is circulating means.

That is, in Fig. 3, the used paper pulp UPP macerated by the macerating unit 20 is circulated through the used paper pulp circulation route 49 by the circulation pump 69, and is beaten by the grinder 50, and at this time the beating gap G of the beating action surfaces 51a, 52a of the grinder 50 is controlled by the gap adjusting means 57 so as to be narrower gradually from the initial period to the terminal period of the beating process.

In the used paper pulp circulation route 49, the macerating tank 25 of the macerating unit 20 is included, and in this beating process, the agitating device 26 of the macerating unit 20 is driven and controlled, and the macerating unit 20 is driven simultaneously with the beating unit 21. That is, in the circulation system beating process, the used paper pulp UPP flows out into the used paper pulp circulation route 49 from the macerating tank 25, while the used paper pulp UPP beaten by the grinder 50 flows into the macerating tank 25, and therefore in the macerating tank 25, the used paper pulp UPP of different degrees of beating is mixed, and by the agitating action by the agitating device 26, the degree of beating of the used paper pulp UPP in the macerating tank 25 is made uniform, and the beating process is promoted.

The used paper pulp collection tank 60 is a location for collecting the used paper pulp UPP beaten and pulverized to a desired size by the beating unit 21, and the used paper pulp UPP collected herein is mixed and adjusted to a paper making concentration corresponding to the finished paper quality of the regenerated paper RP to be regenerated as a pulp suspension PS, by the pulp concentration adjusting unit 3, and is sent to the paper making unit 4 in a next paper making process.

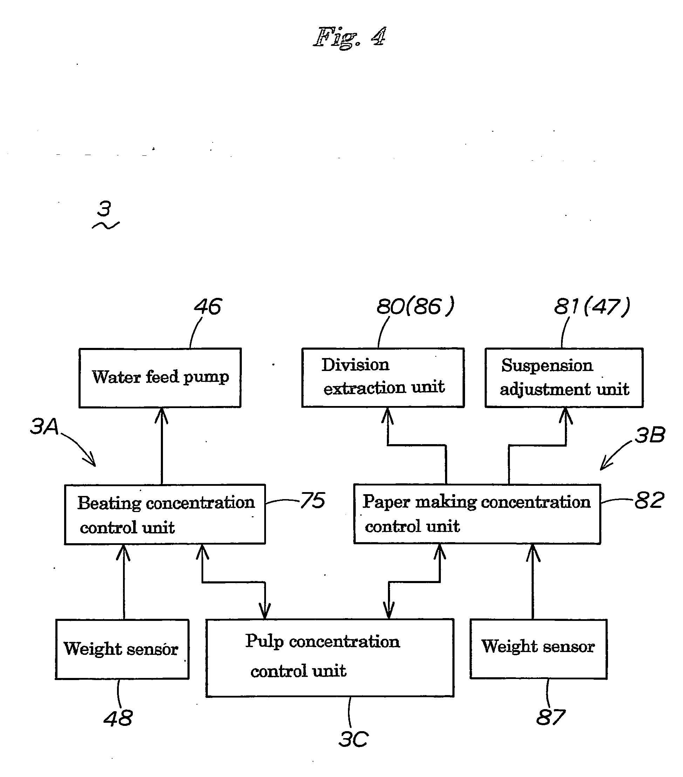

The pulp concentration adjusting unit 3 is a weight type device for adjusting the concentration of the used paper pulp UPP supplied in the paper making unit 4, by measuring the weight and adjusting the mixing rate of used paper UP and water W supplied into the apparatus, and more specifically as shown in Fig. 4, it includes a beating concentration adjusting unit 3A, a paper making concentration adjusting unit 3B, and a pulp concentration control unit 3C.

The beating concentration adjusting unit 3A is to adjust the beating concentration of the used paper pulp UPP in the pulp making unit 2, corresponding to the beating efficiency by the beating unit 21, and as mentioned above, it is mainly composed of the water feed pump 46 and the beating concentration control unit 75 for adjusting the beating concentration of the water feed device 27.

The supply amount of white water W by the water feed pump 46 of the beating concentration adjusting unit 3A is preferred to be set so that the beating concentration of the used paper pulp UPP macerated and beaten by the agitating device 26 may be, for example, the maximum concentration allowable for the beating capacity of the grinder 50 of the beating unit 21 for executing the next step of the beating process, and in the illustrated preferred embodiment, it is set to be a beating concentration of about 2% as mentioned above.

The beating concentration control unit 75 drives and controls the water feed pump 46 so as to supply a necessary amount of water W into the macerating tank 25, as mentioned above, depending on the result of measurement from the weight sensor 48. This beating concentration control unit 75 composes a part of the apparatus control unit 5 as described below.

The paper making concentration adjusting unit 3B is to adjust the paper making concentration of the used paper pulp UPP in the paper making unit 4, to an appropriate concentration corresponding to the finished paper quality of the regenerated paper RP to be regenerated, and is more specifically designed to adjust the concentration of the used paper pulp UPP manufactured in the pulp making unit 2 by a division system, and it mainly includes a division extraction unit 80, a suspension preparing unit 114, and a paper making concentration control unit 82.

The division extraction unit 80 is to divide and extract by a specified small portion from the total volume of the used paper pulp UPP manufactured in the pulp making unit 2 in the preceding process, and includes a used paper pulp supply pump 86 for division and extraction for extracting the used paper pulp UPP of the used paper pulp collection tank 60 and sending to a concentration adjusting tank 85.

A suspension preparing unit 114 is to prepare a pulp suspension PS of a specified concentration by adding a prescribed amount of water W for concentration adjustment to the specified small portion of the used paper pulp UPP divided and extracted by the division extraction unit 80, and mainly includes a water feed pump 47 of the water feed device 27.

Although not shown specifically, in the bottom of the concentration adjusting tank 85, same as in the case of the macerating tank 25 mentioned above, a weight sensor 87 composed of a load cell is provided, and is designed to measure and control the amount of the used paper pulp UPP and water W for concentration adjustment supplied into the concentration adjusting tank 85, and the weight sensor 87 is electrically connected to the apparatus control unit 5.

The paper making concentration control unit 82 controls by interacting the division extraction unit 80 and the suspension preparing unit 114, and forms a part of the apparatus control unit 5, and controls the pumps 86, 47 of the division extraction unit 80 and the suspension preparing unit 114 by interaction so as to execute the following step of the paper making concentration adjusting process.

First of all, from the whole volume of the used paper pulp UPP collected into the used paper pulp collection tank 60 from the beating unit 21 (in the illustrated preferred embodiment, about 2000 g of used paper UP + 100 L of water W), the used paper pulp UPP of a specified portion (1 L in the illustrated preferred embodiment) is divided by the used paper pulp supply pump 86, and is transferred and contained in the concentration adjusting tank 85. As a result, its weight is sensed and measured by the weight sensor 87, and the result is sent to the apparatus control unit 5.

In succession, corresponding to the specified portion of the divided used paper pulp UPP, diluting water W is supplied by the water feed pump 47 into the concentration adjusting tank 85 from the white water collection tank 45 by a specified volume (9 L in the illustrated preferred embodiment, actually as weighed and measured by the weight sensor 87).

As a result, in the concentration adjusting tank 85, the used paper pulp UPP of beating concentration (2% in the illustrated preferred embodiment) and the water W are mixed and diluted, and a pulp suspension PS of a specified concentration (about 0.2% concentration or target concentration in the illustrated preferred embodiment) is mixed and prepared.

The target concentration of the pulp suspension PS to be prepared is determined in consideration of the paper making capacity in the paper making unit 4 described below on the basis of the results of the preliminary experiment, and it is set to about 0.2% in the illustrated preferred embodiment as mentioned above.

In this way, the pulp suspension PS prepared to the paper making concentration (0.2%) of the target concentration in the concentration adjusting tank 85 is transferred and supplied into a pulp supply tank 89 from the concentration adjusting tank 85 by a first suspension supply pump 88, and is stored in preparation for the next process of paper making unit 4. Thereafter, this paper making concentration adjustment process is repeated similarly for the entire volume of the used paper pulp UPP in the used paper pulp collection tank 60. The pulp supply tank 89 is provided with a second suspension supply pump 90 for sending the pulp suspension PS into a paper making conveyor unit 95 of the paper making unit 4.

An agitating device 91 is provided in the pulp supply tank 89, and by the agitating action of this agitating device 91, the paper making concentration of the entire stored and held pulp suspension PS is uniformly kept at a specific value.

As described herein, the concentration adjustment by the paper making concentration adjusting unit 3 is not done in batch of whole volume, but is done in divided portions, that is, in small portions, and the water consumption is saved substantially, and the concentration adjusting tank 85 can be reduced in size and shape substantially, and hence the used paper recycling apparatus 1 is entirely built in a compact design.

The pulp concentration control unit 3C is to drive and control the beating concentration adjusting unit 3A and the paper making concentration adjusting unit 3B in interlock, and specifically by receiving the pulp concentration control information (the charging amount of the used paper UP, the water supply amount into the macerating tank 25, the beating concentration of the used paper pulp UPP, etc.) from the beating concentration control unit 75 of the beating concentration adjusting unit 3A, the paper making concentration information (the target paper making concentration of the used paper pulp UPP, the division extraction amount of the used paper pulp UPP from the used paper pulp collection tank 60, the water supply amount into the concentration adjusting tank 85, etc.) for adjusting the concentration of the used paper pulp UPP manufactured in the pulp making unit 2 to the target concentration (the paper making concentration) depending on this control information sent to the paper making concentration control unit 82 of the paper making concentration adjusting unit 3B, and thereby the paper making concentration adjusting process is executed.

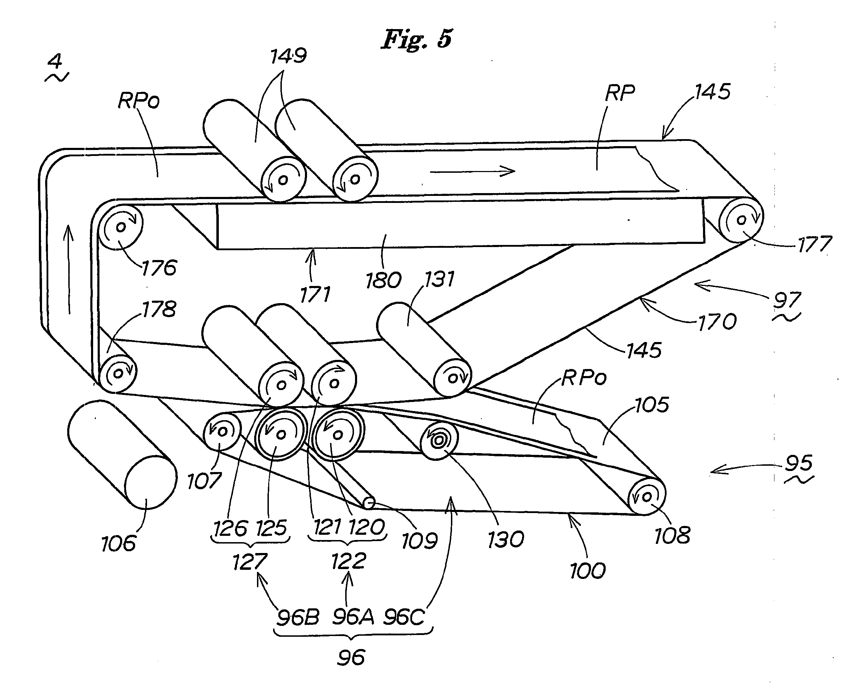

The paper making unit 4 is a process location for manufacturing regenerated paper RP from the used paper pulp UPP manufactured in the pulp making unit 2, and is mainly composed of, as shown in Fig. 1 and Fig. 5, a paper making conveyor unit 95, a dewatering roll unit 96, and a drying belt conveyor unit 97, as principal components.

The paper making conveyor unit 95 is a location for manufacturing wet paper by making from slurry-like pulp suspension PS composed of the water W and the used paper pulp UPP sent from the pulp supply tank 89 of the pulp making unit 2, and mainly includes a paper making net conveyor 100 and a pulp supply unit 101.

The paper making net conveyor 100 is for conveying the pulp suspension while making paper therefrom, and a mesh belt 105 of paper making mesh structure composed of numerous mesh cells is disposed for filtering and dewatering the pulp suspension PS while running straightly in its running direction.

Specifically, the paper making net conveyor 100 includes the mesh belt 105 of an endless belt form for conveying the pulp suspension while making paper from pulp suspension PS, and a drive motor 106 for driving and moving this mesh belt 105.

The plate member of the paper making mesh structure for composing the mesh belt 105 is a material capable of filtering and dewatering the pulp suspension PS appropriately by way of the numerous mesh cells of the paper making mesh structure, and preferred materials include polypropylene (PP), polyethylene terephthalate (PET), polyamide (PA) (generally known as Nylon, a registered trademark), stainless steel (SUS), and other corrosion resistant materials, and in the illustrated preferred embodiment, a PET-made mesh belt 105 excellent in heat resistance is used.

The mesh belt 105 is, as shown in Fig. 1, Fig. 5, and Fig. 6, suspended and supported rotatably by way of a drive roller 107, a dewatering roll unit 96, a driven roller 108, and a support roller 109, and is driven and coupled to the drive motor 106 by way of the drive roller 107.

The paper making process length in the mesh belt 105 is determined in a range of upper side running direction length of the mesh belt 105 in the apparatus case 6 of furniture size (in the illustrated preferred embodiment, the lateral direction length from the pulp supply unit 101 to the dewatering roll unit 96 in Fig. 1).

The running speed of the mesh belt 105 is set in consideration of various conditions in the paper making process, and preferably set at 0.1 m/min to 1 m/min, and set at 0.2 m/min in the illustrated preferred embodiment. By contrast, in large-scale plant such as conventional used paper recycling factory, the running speed of the paper making belt of this type is set at least at 100 m/min or more, or even more than 1000 m/min in a faster version.

As shown in Fig. 1, Fig. 5, and Fig. 6, the mesh belt 105 is disposed so as to run obliquely upward and straightly toward its running direction, and in the limited space of installation, the paper making process length can be extended considerably, and the filtering and dewatering rate is enhanced in the relation with the paper making mesh structure of the mesh belt 105.

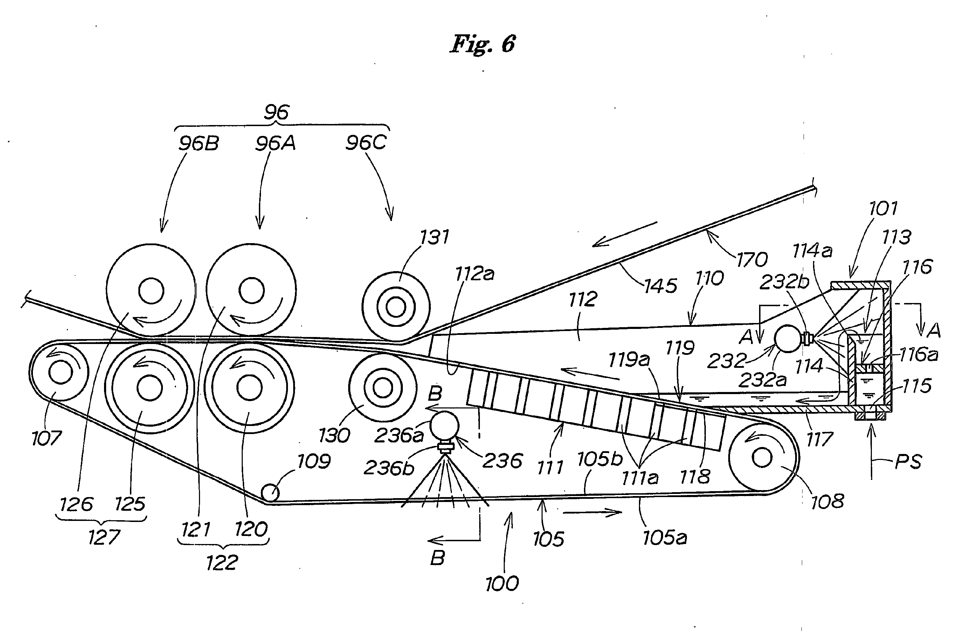

At the inside position of the annular running route of the mesh belt 105, as shown in Fig. 1 and Fig. 6, a high-pressure cleaning nozzle 205 for composing the belt cleaning means of the cleaning system CS described below-is provided, and clean water W stored in a cleaning water supply tank 230 is supplied into this high-pressure cleaning nozzle 205 from a water feed pump 235.

The drive motor 106 for moving and driving the mesh belt 105 is specifically an electric motor, and is connected electrically to the apparatus control unit 5. This drive motor 106 is also used as the running and driving source of the dewatering roll unit 96 and the drying belt conveyor unit 97 described below.

The pulp supply unit 101 is a location for supplying a pulp suspension PS onto the mesh belt 105 from the pulp making unit 2, and is provided at a start end position of the paper making process of the paper making net conveyor 100, and by this pulp supply unit 101, the pulp suspension PS is spread and supplied uniformly on the top surface of the mesh belt 105.

A specific configuration of the pulp supply unit 101 in the illustrated preferred embodiment is sown in Fig. 6. That is, in this pulp supply unit 101, the mesh belt 105 is disposed in an upward inclination toward the running direction as mentioned above, and at the both upper and lower side positions of this mesh belt 105, a paper making frame body 110, and a partition member 111 are disposed respectively.

The paper making frame body 110 is disposed slidably on the upper side of the mesh belt 105, and includes, as shown in Fig. 6, a main body frame 112 opened at the leading end portion, that is, at the side end portion of running direction of the mesh belt 105, and an overflow tank 113 provided at the rear end portion of this main body frame 112.

The main body frame 112 is disposed so that its lower end side 112a may slide on the upper side of the mesh belt 105 running obliquely, and the frame inner width dimension of the main body frame 112 is set at the width dimension of the regenerated paper RP to be manufactured.

The overflow tank 113 is fixed integrally at the rear end portion of the main body frame 112, and its front wall is an overflow weir 114, and its upper edge 114a having a peak-shaped section in a horizontal straight state of the overflow weir 114 forms an overflow part. In this overflow tank 113, the pulp suspension PS in the pulp supply tank 89 is supplied from a bottom opening 115.

Inside the overflow tank 113, a partition member 116 having communication holes 116a, 116a, ... of small diameter disposed at specified intervals in the width direction is provided, and when the pulp suspension PS overflowing from the overflow part 114a passes through the plurality of communication holes 116a, 116a, ..., it is uniformly dispersed in the overall width of the overflow part 114a, and the overflow volume is adjusted to be uniform throughout the overall width of the overflow part 114a.

Then the pulp suspension PS is supplied and reserved in the overflow tank 113 from the pulp supply tank 89, and when the overflow tank 113 is filled up with the pulp suspension PS, by a further supply of the pulp suspension PS, the pulp suspension PS overflows from the overflow part 114a of the overflow tank 113 as indicated by arrow in Fig. 6, and flows down onto a residence plate 117 serving also as a bottom plate.

The partition member 111 is disposed slidably on the lower side of the mesh belt 105, and has a louver structure capable of draining water, composed of a plurality of framework members 111a, 111a, ..., as shown in Fig. 6, and it has a shape and dimensions for slidably supporting the overall width of the lower side of the mesh belt 105, and the base end side position of the louver structure is closed by a flat plate member 118.

The flat plate member 118 is disposed at a position corresponding to the residence plate 117 of the paper making frame body 110 as shown in Fig. 6, and specifically it is disposed so as to be consecutive to the residence plate 117, so that the mesh cells at the staying and supplying position of the pulp suspension PS in the mesh belt 105 are supported in a closed state by the flat plate member 118.

At the leading edge of the residence plate 117, a thin guide sheet 119 is provided for assuring a smooth flow of the pulp suspension PS onto the mesh belt 105. A leading edge 119a of this guide sheet 119 is set at a position corresponding to one of the beams for composing the louver structure of the partition member 111, that is, one of the framework members 111a, 111a, ... (in this preferred embodiment, the second beam 111a from the last), specifically it is disposed slidably at the upper side position of the mesh belt 105 supported by this beam 111a.

Inside of the paper making frame body 110 of the pulp supply unit 101, an injection nozzle 232 for composing pulp supply unit cleaning means o the cleaning system CS described below is provided, and in this injection nozzle 232, clean water W such as tap water reserved in a cleaning water supply tank 230 is supplied from a water feed pump 231.

By the second suspension supply pump 90, the pulp suspension PS is supplied into the overflow tank 113 of the pulp supply unit 101 from the pulp supply tank 89, and overflows from the overflow part 114a of the overflow tank 113, and flows down onto the residence plate 117.

The pulp suspension PS is diffused uniformly on the upper side of the mesh belt 105 by the residence action in cooperation between the main body frame 112 and the partition member 111 of the paper making frame body 110, and is conveyed together with the mesh belt 105 by the driving action of the mesh belt 105 in the arrow direction, while maintaining the specified width dimension by the main body frame 112, and is filtered by weight by the mesh cells of the mesh belt 105, and is dewatered, and wet paper RP₀ (water content 90 to 85% in the illustrated preferred embodiment) is obtained.

The white water W filtered and dewatered by this mesh belt 105 (pulp water of ultra-low concentration filtered by the paper making mesh in the paper making process) is collected in the white water collection tank 45 of the water feed device 27 as mentioned above.

The dewatering roll unit 96 forms a location for squeezing and dewatering the wet paper RP₀ on the mesh belt 105 at the linkage position of the paper making belt conveyor unit 95 and the drying belt conveyor unit 97 described below.

Specifically, a smooth surface belt 145 mentioned below of the drying belt conveyor unit 97 at the downstream side, and the mesh belt 105 of the paper making conveyor unit 95 at the upstream side are disposed in upper and lower layers as shown in Fig. 1 and Fig. 5, and the upper and lower adjacent portions of the smooth surface belt 145 and the mesh belt 105 are formed at the linkage portion, and at this linkage portion, the dewatering roll unit 96 rolls and compresses the mesh belt 105 and the smooth surface belt 145 from upper and lower sides, thereby dewatering the wet paper in compressed state.

The dewatering roll unit 96 includes at least a preliminary dewatering roll unit 96A, and a final dewatering roll unit 96B as principal components.

The dewatering roll unit 96 in the illustrated preferred embodiment includes, as shown in Fig. 1, the preliminary dewatering roll unit 96A, the final dewatering roll unit 96B, and an angle defining roll unit 96C as assisting means, as principal components.

The preliminary dewatering roll unit 96A is for squeezing and dewatering preliminarily the wet paper RP₀ on the mesh belt 105, and specifically includes a preliminary squeezing roll pair 122 consisting of a preliminary dewatering roll 120 rolling on the mesh belt 105 from the lower side, and a preliminary press roll 121 rolling and pressing on the smooth surface belt 145 from the upper side in collaboration with the preliminary dewatering roll 120.

By the preliminary squeezing roll pair 122 consisting of the preliminary dewatering roll 120 and the preliminary press roll 121, the mesh belt 105 and the smooth surface belt 145 are rolled and squeezed from both upper and lower sides at a specified preliminary pressure in a compressed state, and the water content in the wet paper RP₀ on the mesh belt 105 is removed preliminarily.

In this case, the preliminary pressure, that is, the preliminary squeezing force of the preliminary dewatering roll 96A for preliminarily squeezing and dewatering the wet paper RP₀ on the mesh belt 105 is set at a magnitude so as not to destroy the wet paper RP₀ of high water content, and in the illustrated preferred embodiment, the preliminary squeezing force is determined so that the water content rate of the wet paper RP₀ on the mesh belt 105 after preliminary dewatering process may be in a range of 80 to 75%.

The final dewatering roll unit 96B is for obtaining a dry paper specified water content rate (regenerated paper) RP by final squeezing and dewatering the wet paper RP₀ on the mesh belt 105 after preliminary dewatering by the preliminary dewatering roll unit 96A, and specifically includes at least one set of a final squeezing roll pair 127 consisting of a final dewatering roll 125 rolling on the mesh belt 105 from the lower side, and a final press roll 126 rolling and pressing on the smooth surface belt 145 from the upper side in cooperation with the final dewatering roll 125.

By the final squeezing roll pair 127 consisting of the final dewatering roll 125 and the final press roll 126, the mesh belt 105 and the smooth surface belt 145 are rolled and squeezed from both upper and lower sides at a specified final pressure in a compressed state, and the water content in the wet paper RP₀ on the mesh belt 105 is finally removed, and a dry paper of specified water content rate, that is, regenerated paper RP is obtained.

In this case, the final pressure, that is, the final squeezing force of the final dewatering roll 96B for finally squeezing and dewatering the wet paper RP₀ on the mesh belt 105 is set to such a magnitude for obtaining a specified dewatering effect securely about the preliminarily dewatered wet paper RP₀, and in the illustrated preferred embodiment, it is set so that the water content rate of the dry paper (regenerated paper) RP on the mesh belt 105 after the final dewatering process may be in a range of 70 to 65%.

These rolls 120, 121, 125, 126 in the dewatering roll unit 96 are not specifically shown, but as being driven and coupled to the single drive motor 106 by driving and coupling means of gear mechanism, all rolls 120, 121,125,126 are rotated and driven in mutual interaction.

In this case, these rolls 120, 121,125,126 are rotated and controlled so as to roll and contact mutually at a slight rotating speed difference mutually on the outer circumferential surfaces of the upper and lower rolls 120, 125 and the outer circumferential surfaces of 121, 126, on the contact surfaces (the lower side of the mesh belt 105 and the upper side of the smooth surface belt 145) of the mesh belt 105 and the smooth surface belt 145 rolled and squeezed in a compressed state between the outer circumferential surfaces.

Specifically, the rotating speed of the upper side preliminary and final press rolls 121, 126 is set slightly larger than the rotating speed of the lower side preliminary and final dewatering rolls 120, 125, and therefore the running speed of the smooth surface belt 145 is set slightly larger than the running speed of the mesh belt 105. In such configuration, as described below, when the wet paper RP₀ squeezed and dewatered by the dewatering roll unit 96 is transferred and conveyed to the lower side of the upper side smooth surface belt 145 from the upper side of the lower side mesh belt 105, a tension is applied to the wet paper RP₀, and wrinkling of the wet paper RP₀ is effectively prevented.

The angle defining roll unit (angle defining means) 96C is for assisting the squeezing and dewatering action of the preliminary dewatering roll unit 96A and the final dewatering roll unit 96B to be effective, and it is provided at the upstream side of the preliminary dewatering roll unit 96A, and defines the inclination angle between the mesh belt 105 and the smooth surface belt 145 inserted in the preliminary dewatering roll unit 96A.

The angle defining roll unit 96C is specifically for defining the inclination angle between the mesh belt 105 and the smooth surface belt 145 inserted in the preliminary dewatering roll unit 96A, and more specifically it includes a mesh belt guide roll 130 rolling on the mesh belt 105 from the lower side, and defining the insertion angle of the mesh belt 105 in the preliminary dewatering roll unit 96A, and a smooth surface belt guide roll 131 rolling on the smooth surface belt 145 from the upper side, and defining the insertion angle of the smooth surface belt 145 in the preliminary dewatering roll unit 96A.

By the mesh belt guide roll 130, the insertion angle of the mesh belt 105 in the preliminary dewatering roll unit 96A is defined, and by the smooth surface belt guide roll 131, the insertion angle of the smooth surface belt 145 in the preliminary dewatering roll unit 96A is defined, and therefore the inclination angle between the mesh belt 105 and the smooth surface belt 145 is indirectly determined in a specified range.

The inclination angle of the mesh belt 105 and the smooth surface belt 145 is determined so as to prevent effectively the wet paper RP₀ from returning to slurry by re-absorption of a large volume of squeezed water into the wet paper RP₀ after the water contained in the wet paper RP₀ is once squeezed substantially to the upstream side of the preliminary dewatering roll unit 96A by the preliminary dewatering action by the preliminary dewatering roll unit 96A.

That is, by the preliminary dewatering roll 120 and the preliminary press roll 121 of the preliminary dewatering roll 96A, when the mesh belt 105 and the smooth surface belt 145 on which the wet paper RP₀ is mounted at the upper side are squeezed and rolled from the upper and lower sides in a compressed state, the water content in the wet paper RP₀ is squeezed out to the upstream side of the both rolls 120, 121.

In this case, if the inclination angle α between the mesh belt 105 and the smooth surface belt 145 is too large, at a position near the upstream side of the both rolls 120, 121, the upper side smooth surface belt 145 is apart from the wet paper RP₀ on the lower side mesh belt 105, and hence a part of the abundant squeezed water contained in the wet paper RP₀ may be absorbed again in the wet paper RP₀, and the wet paper RP₀ may become slurry again.

By contrast, when the inclination angle α between the mesh belt 105 and the smooth surface belt 145 is small, at a position near the upstream side of the both rolls 120, 121, the upper side smooth surface belt 145 is pressed to the wet paper RP₀ on the lower side mesh belt 105, and hence all of the water squeezed from the wet paper RP₀ drops to the lower side by way of the mesh belt 105, and is not absorbed again in the wet paper RP₀, and the wet paper RP₀ may be prevented from becoming slurry again.

The inclination angle α between the mesh belt 105 and the smooth surface belt 145 is preferably set in a range of 1 to 20 degrees as a result of various tests, preferably 3 to 7 degrees, and it is set at 5 degrees in the illustrated preferred embodiment.

Thus, by driving of the drive motor 106, the rolls 120, 121, 125, 126 of the preliminary dewatering roll unit 96A and the final dewatering roll unit 96B in the dewatering roll unit 96 are put in rotation, and first by the preliminary squeezing roll pair 122 in the preliminary dewatering roll unit 96A, the mesh belt 105 and the smooth surface belt 145 are rolled and squeezed from both upper and lower sides in a compressed state at a specified preliminary pressure, and the water contained in the wet paper RP₀ on the mesh belt 105 is preliminarily removed (in the illustrated preferred embodiment, the water content rate in the wet paper RP₀ is reduced from 90 to 85% to 80 to 75%).

In succession, by the final squeezing roll pair 127 in the final dewatering roll unit 96B, the mesh belt 105 and the smooth surface belt 145 are rolled and squeezed from both upper and lower sides in a compressed state at a specified final pressure, and the water contained in the wet paper RP₀ on the mesh belt 105 is finally removed, and the dry paper of specified water content rate, that is, the regenerated paper RP is obtained (in the illustrated preferred embodiment, the wet paper RP₀ of water content rate of 80 to 75% is dewatered to the dry paper RP of water content rate of 70 to 65%). In this series of process, the white water W squeezed and dewatered from the wet paper RP₀ is collected in the white water collection tank 45 in the water feed device 27.

The wet paper RP₀ squeezed and dewatered by the dewatering roll unit 96 is transferred and conveyed to the lower side of the upper side smooth surface belt 145 from the upper side of the lower side mesh belt 105, at a downstream side location of the dewatering roll unit 96, and is conveyed together with the smooth surface belt 145, and is dried by the drying belt conveyor unit 97 in the drying process.

This transfer action is considered to be caused by a smooth surface structure of the smooth surface belt 145. That is, the surface of the lower side mesh belt 105 is a fine rough surface having multiple openings of fine and continuous pores, whereas the surface of the upper side smooth surface belt 145 is a smooth surface without pores, and hence the wet paper RP₀ slightly containing water seems to be adsorbed by the surface tension against the surface of the smooth surface belt 145.

The drying belt conveyor unit 97 is a location for manufacturing the regenerated paper RP by further heating and drying the dry paper RP squeezed and dewatered in the dewatering roll unit 96, after being made and formed in the paper making conveyor unit 95, and is mainly composed of a drying conveyor 170, heating and drying unit 171.

The drying conveyor 170 is for smoothing and conveying the wet paper RP₀ squeezed and dewatered in the dewatering roll unit 96, and mainly includes the smooth surface belt 145, and the drive moor 106 for driving and moving this smooth surface belt 145.

The smooth surface belt 145 is to convey the wet paper RP₀ while heating and drying, and is specifically an endless belt connected and formed in an annular shape of a specified length of a plate material of smooth surface structure having a specified width. The plate material of smooth surface structure is finished in an appropriate smooth surface at one side of the surface of the wet paper RP₀, and is made of a material capable of withstanding the heating action of the heating and drying unit 171 described below, and preferably an elastic heat resistant material is used such as fluorine resin or stainless steel, and a fluorine resin belt is used in the illustrated

### preferred embodiment.

This smooth surface belt 145 is, as shown in Fig. 1, rotatably supported and held by way of a drive roller 176, a driven roller 177, the dewatering roll unit 96, and a driven roller 178, and is driven and coupled to the drive motor 106 by way of the drive roller 176.

The drive motor 106 for driving and moving the smooth surface belt 145 is commonly used as the running and driving source of the paper making conveyor 100 and the dewatering roll unit 96, and also a covering belt 200 mentioned below.

The heating and drying unit 171 is a location for heating and drying the wet paper RP₀ on the smooth surface belt 145 and the covering belt 200 of the regenerated paper smoothing processing unit 10 described below, and specifically the smooth surface belt 145 conveying and supporting the lower side of the wet paper RP₀ is heated from the lower side by a heater plate 180 disposed in the midst of its running route.

This heater plate 180 in the illustrated preferred embodiment is specifically formed as a heater plate sliding and contacting with the opposite side of the conveying and supporting side of the wet paper RP₀ on the smooth surface belt 145, and is provided in the horizontal running portion of the running route of the smooth surface belt 145, and is disposed to slide and contact with the opposite side of the upper side of the holding side of the wet paper RP₀ on the smooth surface belt 145, that is, the lower side. Hence, the wet paper RP₀ on the smooth surface belt 145 is indirectly heated and dried by way of the smooth surface belt 145 heated by the heater plate 180.

In the midst of the running route of the smooth surface belt 145, the two smooth surface finishing rolls 149, 149 are disposed, and the wet paper RP₀ on the smooth surface belt 145 is rolled and pressed sequentially, and the opposite-side surface of the one-side surface of the wet paper RP₀ contacting with the surface of the smooth surface belt 145 is finished to an appropriate smooth surface.

At the downstream side of the heating and drying unit 171 in the smooth surface belt 145, a peeling member 210 is provided, and the dry paper dried and conveyed on the smooth surface belt 145, that is, the regenerated paper RP (water content rate 10 to 7%) is sequentially peeled from the holding side of the smooth surface belt 145.

In this relation, at the terminal end position of the running route of the smooth surface belt 145 at the downstream side of this peeling member 210, a fixed size cutter unit 211 is provided,- and the regenerated paper RP peeled off from the smooth surface belt 145 is cut to a specified size (an A4 format in the illustrated preferred embodiment), and is discharged from the discharge port 8 of the apparatus case 6.

The cleaning system CS is for cleaning the apparatus components, specifically the pulp making unit 2, the pulp concentration adjusting unit 3, and the paper making unit 4.

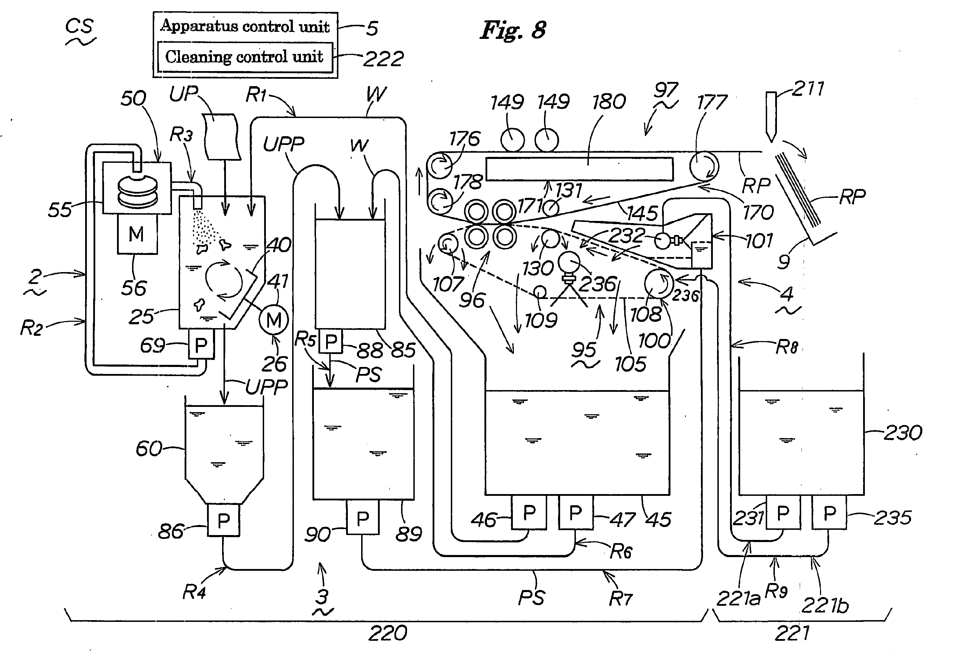

This cleaning system CS mainly includes, as shown in Fig. 8, a white water cleaning unit (white water cleaning means) 220, a clean water cleaning unit (clean water cleaning means) 221, and a cleaning control unit 222, as principal components.

The white water cleaning unit (white water cleaning means) 220 is to circulate the white water W dewatered and collected in the paper making unit 4 in the apparatus components, at least the pulp making unit 2 and the pulp concentration adjusting unit 3, and to clean these apparatus components, and includes, as shown in Fig. 8, the water feed device 27 as a cleaning water supply source, cleaning water circulation routes R₁ to R₇, and circulation pumps (water feed pump 46, circulation pump 69, supply pump 86, water feed pump 47, supply pump 88, and supply pump 90), as principal components.

The water supply source of the water feed device 27 is the white water W dewatered in the paper making unit 3 collected in the white water collection tank 45, and this white water W dewatered and collected in the paper making unit 3 is all fed back and utilized in the agitating device 26 of the macerating unit 20 and in the pulp concentration adjusting unit 3 in a water circulation system.

The cleaning water circulation routes R₁ to R₇ are configured to circulate water from the water feed device 27 to the pulp making unit 2, and the pulp concentration adjusting unit 3, and back to the water feed device 27 again, specifically consisting of route R₁ from the white water collection tank 45 to the agitating tank 25, route R₂ from the agitating tank 25 to the beating tank 55 (piping 49a of the used pulp circulation route 49), route R₃ from the beating tank 55 to the agitating tank 25 (piping 49b of the used pulp circulation route 49), route R₄ from the used pulp collection tank 60 to the concentration adjusting tank 85, route R₅ from the concentration adjusting tank 85 to the pulp supply tank 89, route R₆ from the white water collection tank 45 to the concentration adjusting tank 85, and route R₇ from the pulp supply tank 89 to the pulp feed unit 101.

The circulation pumps 46, 69, 86, 47, 88, 90 are individually supply pumps provided in the cleaning water circulation routes R₁ to R₇, specifically in the tanks 45, 25, 86, 85, 89, and are intended to circulate the cleaning water (white water) W in the cleaning water circulation routes R₁ to R₇, and are individually connected electrically to the cleaning control unit 222 described below, and are driven and controlled in mutual cooperation.

The clean water cleaning unit (clean water cleaning means) 221 is for cleaning the paper making unit 4 by clean water W, and is composed of, as shown in Fig. 8, a pulp supply unit cleaning unit (pulp supply unit cleaning means) 221a for cleaning the pulp supply unit 101, and a belt cleaning unit (belt cleaning means) 221b for cleaning the mesh belt 105 of the paper making net conveyor 100.

The pulp supply unit cleaning unit 221a includes a cleaning water supply tank 230 as a cleaning water supply source, a water feed pump 231, a cleaning water supply route R₈, and a first injection nozzle device (first injection means) 232, as principal components.

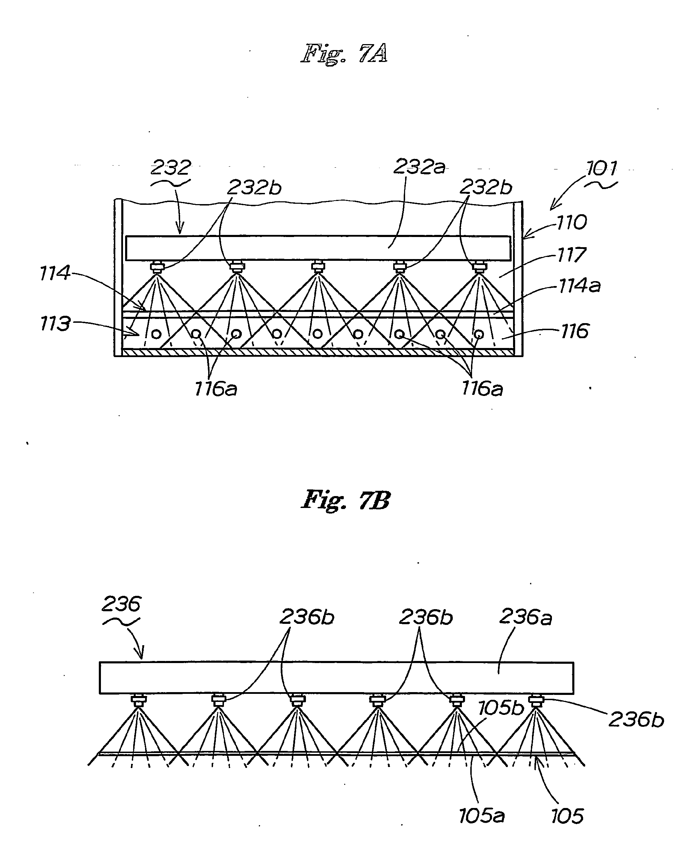

The first injection nozzle device 232 is for injecting cleaning water (clean water) W toward the overflow part 114a of the overflow weir 114 of the pulp supply unit 101 as shown in Fig. 6 and Fig. 7 (a). It is by the following reason that this portion is cleaned by injecting clean water W.

That is, the leading end edge of the overflow part 114a has a horizontal and straight peak-shape section (see Fig. 6) as mentioned above, and the overflow volume of the pulp suspension PS intended to be uniform throughout the overall width of the overflow part 114a. However, by plural times of paper making operation (for example, during one day' s working time), at the leading end edge of the overflow part 114a, the used paper pulp UPP in the pulp suspension PS is likely to remain and deposit non-uniformly, and when this state is left over, the overflow volume of the pulp suspension PS in the overflow part 114a becomes uneven depending on the width direction position of the overflow part 114a, and as a result the pulp suspension PS may not be diffused uniformly on the upper side of the mesh belt 105 in the subsequent process. It is hence necessary to remove the used paper pulp UPP remaining and depositing on the leading end edge of the overflow part 114a by injection and cleaning by the clean water W.

A specific structure of the first injection nozzle device 232 is as shown in the drawing, that is, a plurality of (five in the illustrated preferred embodiment) injection nozzles 232b, 232b, ... are disposed at specific intervals in a cylindrical device main body 232a, and injection ports of these injection nozzles 232b, 232b, ... are provided toward the overflow part 114a. The cleaning water (clean water) W injected from the injection ports of the injection nozzles 232b, 232b, ... is injected uniformly to the overall width of the overflow part 114a without missing any part as shown in the drawing.

A specific structure of the pulp supply unit 101 may be changed and modified in various forms depending on the specific purpose and condition of the apparatus, and in this case, at a location accompanied by a phenomenon similar to the overflow part 114a of the overflow weir 114 (for example, the used paper pulp UPP in the pulp suspension PS is likely to remain and deposit unevenly, when it is left over in this state, the subsequent pulp suspension PS may diffuse unevenly on the mesh belt 105), the cleaning water (clean water) W is injected by the first injection nozzle device 232.

The belt cleaning unit 221b is mainly composed of the cleaning water supply tank 230 as a cleaning water supply source, a water feed pump 235, a cleaning water supply route R₉, and a second injection nozzle (second injection means) 236.

The second injection nozzle 236 is to inject cleaning water (clean water) W to the running mesh belt 105 from the back side 105b as shown in Fig. 6 and Fig. 7 (b). This portion is injected and cleaned by the clean water W because the used paper pulp UPP may be left over after filtering and dewatering on the mesh cells of the mesh belt 105 by plural times of paper making work (for example, one day' s of working time), and the mesh belt 105 may be clogged by the remaining used paper pulp UPP, and the original filtering and dewatering capacity is lowered, and cannot be expressed sufficiently. Besides, by cleaning by white water by the white water cleaning unit 220, the used paper pulp UPP remaining on the mesh belt 105 may not be cleaned sufficient, and removal by powerful injecting and cleaning by clean water W should be necessary.

A specific structure of the second injection nozzle device 236 is as shown in the drawing, that is, a plurality of (six in the illustrated preferred embodiment) injection nozzles 236b, 236b, ... are disposed at specified intervals in a cylindrical device main body 236a, and the injection ports of these injection nozzles 236b, 236b, ... are provided toward the back side 105b of the mesh belt 105. The cleaning water (clean water) W injected from the injection ports of the injection nozzles 262b, 262b, ... is injected uniformly to the overall width of the mesh belt 105 without missing any part as shown in the drawing.

The injection pressure of the second injection nozzle device 236 is set far higher than the injection pressure of the first injection nozzle device 232 for this purpose (for example, about 20 to 40 times higher), and in the illustrated preferred embodiment, the injection pressure of the second injection nozzle device 236 is set preferably at 1 mega-Pascal (MPa) or more, and the injection pressure of the first injection nozzle device 232 set about 1/30 thereof.

The cleaning control unit 222 is to control the white water cleaning unit 220 and the clean water cleaning unit 221 (pulp supply unit cleaning unit 221a, belt cleaning unit 221b) in mutual cooperation, and specifically a part of the apparatus control unit 5 is formed, and it is configured to interact and control the circulation pumps 46, 69, 86, 47, 88, 90 of the white water cleaning unit 220, and the water feed pumps 231, 235 of the clean water cleaning unit 221 (221a, 221b), in order to execute the following cleaning processes (A) to (C), and in these cleaning processes, by interlocking with driving of these pumps 46, 69, 86, 47, 88, 90,231, 235, it is designed to drive and control the pulp making unit 2, the pulp concentration adjusting unit 3, and the paper making unit 4 to be cleaned and processed.

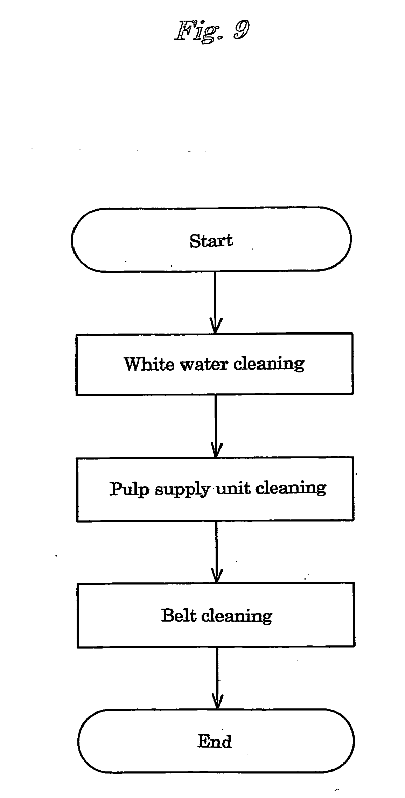

That is, when the used paper recycling operation of one day is over, the cleaning operation is started, and the following cleaning processes (A) to (C) are executed sequentially and continuously (see Fig. 9).

### (A) White water cleaning process

First of all, by the white water cleaning unit 220, the white water W dewatered and collected in the paper making unit 4 is circulated sequentially in the apparatus components, that is, the pulp making unit 2, the pulp concentration adjusting unit 3, and the paper making unit 4, and the pulp making unit 2 and the pulp concentration adjusting unit 3 are cleaned as shown in the following steps (1) to (6), and the white water W spent for this cleaning process is purified after the paper making process in the paper making unit 4, and is discharged.
(1) The white paper W dewatered and collected in the white water collection tank 45 is supplied into the macerating tank 25 of the pulp making unit 2 by way of the route R₁, and is further supplied into the beating tank 55 by way of the route R₂ by the water feed pump 69.
   In collaboration therewith, the beating disks 51, 52 of the agitating device 26 of the macerating tank 25 and the beating tank 55 are relatively driven and rotated, and the cleaning water W is circulated from the macerating tank 25 to the beating tank 55, and further to the macerating tank 25 by way of the route R₃, and these tanks 25, 55 are cleaned.
(2) After cleaning of these tanks 25, 55, the whole volume of the cleaning water W of the macerating tank 25 is supplied into the used paper pulp collection tank 60, and the inside of this used paper pulp collection tank 60 is cleaned.
(3) After cleaning of this used paper pulp collection tank 60, the cleaning water W of the used paper pulp collection tank 60 is supplied into the concentration adjusting tank 85 by way of the route R₄ by the used paper pulp supply pump 86. On the other hand, in this concentration adjusting tank 85, cleaning water W is separately supplied from the white water collection tank 45 by way of the route R₆ by the water feed pump 47. By these supplies of cleaning water W, the inside of the concentration adjusting tank 85 is cleaned.
(4) After cleaning of the concentration adjusting tank 85, the cleaning water W is supplied into the pulp supply tank 89 by way of the route R₅ by the first suspension supply pump 88, and the inside of this pulp supply tank 89 is cleaned.
(5) After cleaning of the pulp supply tank 89, the spent cleaning water W stored in the pulp supply tank 89 is supplied into the pulp supply unit 101 of the paper making unit 4 by way of the -route R₇ by the second suspension supply pump 90, and after the paper making process by the mesh belt 105, the used paper pulp UPP contained in the cleaning water W is removed (purified) as regenerated paper RP (wet paper RP₀), and is collected again in the white water collection tank 45.
   That is, the spent cleaning water W contained in the pulp supply tank 89 is not known in the pulp concentration (generally lower concentration than the pulp concentration obtained in ordinary operation), but if the concentration is low, the pulp contains traces of sludge, and by operating the mesh belt 105 at low speed, paper can be made, and it is discharged as regenerated paper RP.
   When the spent cleaning water W in the pulp supply tank 89 is used up, one process of white water cleaning process is terminated.
(6) The sequence of the processes (1) to (5) is repeated at least once. That is, the white water W dewatered and collected in the white water collection tank 45 is circulated at least once in the pulp making unit 2, the pulp concentration adjusting unit 3, and the pulp supply unit 101 of the paper making unit 4.
After completion of the white water cleaning process, the white water W filtered and collected (purified) in the white water collection tank 45 is finally dewatered and removed, and fresh water W is supplied and used in a next process of used paper recycling operation.

In the present preferred embodiment, after one session of the processes (1) to (5), the white water W in the white water collection tank 45 is discharged and removed, and fresh water W is supplied.

### (B) Pulp supply unit cleaning process

Next to the white water cleaning process (A), the pulp supply unit 101 is cleaned by the pulp supply unit cleaning unit 221a of the clean water cleaning unit 221.

Specifically, clean water W supplied and reserved in the cleaning water supply tank 230 is supplied into the first injection nozzle device 232 by way of the route R₈ by the water feed pump 231, and from the injection nozzles 232b, 232b, ... of the first injection nozzle device 232, it is injected to the overflow part 114a at the upper edge of the overflow weir 114 of the pulp supply unit 101, and the overflow part 114a is cleaned (see Fig. 6 and Fig. 7 (a)). After cleaning, the cleaning water W is collected in the white water collection tank 45 by way of a drain pipe not shown, and is finally discharged and removed together with the white water W.

### (C) Belt cleaning process

Next to the pulp supply unit cleaning process (B), finally, the mesh belt 105 of the paper making net conveyor 100 is cleaned by the belt cleaning unit 221b of the clean water cleaning unit 221.

Specifically, the clean water W in the cleaning water supply tank 230 is supplied into the second injection nozzle device 236 by way of the route R₉ by the water feed pump 235, and it is injected toward the back side 105b of the mesh belt 105 from the injection nozzles 236b, 236b, ... of this second injection nozzle device 236. The cleaning water W injected to the back side 105b of the mesh belt 105 passes through the numerous mesh cells from the surface side 105a to the back side 105b of the mesh belt 105 as shown in Fig. 6 and Fig. 7 (b), and cleans and removes the used paper pulp UPP clogged in the mesh cells and the used paper pulp UPP remaining on the surface 105a of the mesh belt 105. After cleaning, the cleaning water W is collected in the white water collection tank 45, and is discharged together with the cleaning water spent in the white water cleaning process.

This cleaning is operated while running the mesh belt 105 at low speed, and clean water W is injected to the running mesh belt 105 from the back side 105b, and injection of clean water W by the second injection nozzle device 236 is continued at least during running of a whole revolution of the mesh belt 105 rotating and running in an annular suspended state. In the present preferred embodiment, the operation continues for one full revolution of the mesh belt 105.

These cleaning processes by the cleaning system CS are executed after completion of used paper recycling operation of then used paper recycling apparatus 1 of one day in the present preferred embodiment.

The apparatus control unit 5 includes the cleaning control unit 222 of the cleaning system CS described above, and is for controlling automatically in mutual cooperation of the actions of the drive parts of the pulp making unit 2, the pulp concentration adjusting unit 3, and the paper making unit 4, and is specifically composed of a microcomputer including a CPU, ROMs, RAMs, and I/O ports.

This apparatus control unit 5 incorporates control programs and control information for the cleaning control unit 222 of the cleaning system CS mentioned above, and also programs for executing the pulp making process of the pulp making unit 2, the concentration adjusting process of the concentration adjusting unit 3, and the paper making process of the paper making unit 4, by interacting with each other, and further stores various items of control information necessary for driving of the components 2 (20, 21), 3 (3A, 3B), and 4 (95, 96, 97, 10), for example, the driving time and rotating speed of the agitating device 26 in the macerating unit 20, the water feed timing and water feed amount of the water feed device 27, the driving time and circulation amount of the circulation pump 69 in the beating unit 21, the driving time and rotating speed of the grinder 50, the adjusting timing and beating gap G adjusting amount of the gap adjusting means 57, the running speed of the conveyors 100, 170 in the paper making unit 4, the driving time of the heating and drying unit 171, and the operation timing of the fixed size cutter unit 211, preliminarily as data, or from the keyboard as appropriate selective input data.

In the apparatus control unit 5, as mentioned above, the weight sensors 48, 87, and the drive units 35, 41, 56, 61, 66, 106 are connected electrically, and the apparatus control unit 5 controls these drive units 35, 41, 56, 61, 66, 106, according to the measured values and the control data.

The used paper recycling apparatus 1 having such configuration is started when the power source is turned on, and the components 2 (20, 21), 3 (3A, 3B), and 4 (95, 10, 96) are controlled automatically by the apparatus control unit 5 in mutual interaction, and the used paper UP, UP, ... charged in the inlet 7 of the apparatus case 6 are macerated and beaten by the macerating unit 20 and the beating unit 21 in the pulp making unit 2, and the used paper pulp UPP is manufactured, and further a pulp suspension PS of a paper making concentration is manufactured in the pulp concentration adjusting unit 3, and this pulp suspension PS is manufactured in the paper making process unit 95, the dewatering roll unit 96, and the drying belt conveyor unit 97 of the paper making unit 4, and regenerated paper RP is obtained, which is discharged into the regenerated paper receiving tray 9 from the discharge port 8 of the apparatus case 6.

Moreover, as mentioned above, the cleaning process is executed by the cleaning system CS at the specified timing or intervals.

In the used paper recycling apparatus 1 having such configuration, the cleaning system CS circulates the white water W dewatered and collected in the paper making unit 4 for manufacturing regenerated paper RP from the used paper pulp UPP, in the pulp making unit 2 and the pulp concentration adjusting unit 3, that is, the apparatus components of the used paper recycling apparatus 1, and executes the white water cleaning process (A) for cleaning the pulp making unit 2 and the pulp concentration adjusting unit 3, and also executes the clean water cleaning processes (B), (C) for cleaning the paper making unit 4 by using clean water W, and therefore the used paper pulp UPP remaining in the parts of the apparatus components 2, 3, 4 can be securely cleaned and removed, so that a stable used paper recycling operation is realized all the time.

That is, a large amount of white water W spent in the paper making operations is effectively utilized as cleaning water, and is circulated in the apparatus components including the pulp making unit 2 for manufacturing used paper pulp UPP by macerating and beating the used paper UP, and the pulp concentration adjusting unit 3 for adjusting the concentration of the used paper pulp UPP manufactured in the pulp making unit 2, and therefore the pulp making unit 2 and the pulp concentration adjusting unit 3 requiring a huge amount of cleaning water can be cleaned efficiently and economically, and then the paper making unit 4 is successively cleaned by clean water W not containing used paper pulp UPP, and the used paper pulp UPP not removed by white water W cleaning can be completely removed, and thereby inconveniences can be suppressed and prevented securely, such as drying of remaining used paper pulp UPP to cause operation failures of the valve and pumps of the components due to dried used paper pulp UPP, or occurrence of concentration adjustment error by the remaining used paper pulp UPP.

In this case, by cleaning the pulp making unit 2 and the pulp concentration adjusting unit 3 requiring a huge amount of cleaning water, by a huge volume of white water W, these apparatus components 2, 3 can be cleaned efficiently and economically.

By cleaning the pulp supply unit 101 and the mesh belt 105 of the paper making unit 4 having a large effect on the paper making performance, by using clean water W such as tap water, the regenerated paper RP of an excellent paper quality can be always manufactured efficiently and economically.

The used paper recycling apparatus 1 including such cleaning system CS may be installed not only in a large office but also in a small shop or a general household room, and it is friendly to the environment and low in the running cost, and leak or disclosure of confidential information, personal information and other data can be securely prevented, and a high confidentiality is assured, and the used paper recycling apparatus 1 of furniture size capable of manufacturing regenerated paper stably and at high quality can be presented.

The foregoing preferred embodiment may be modified and changed in design as described below.

For example, a specific configuration of the cleaning system CS of the present invention (white water cleaning unit (white water cleaning means) 220, clean water cleaning unit (clean water cleaning means) 221, cleaning control unit 222, etc.) is not limited to the illustrated preferred embodiment alone, but may be changed and modified in other configurations as far as the functions are similar. For instance, the control configuration of the cleaning control unit 222 may be modified as follows.
(1) In the illustrated preferred embodiment, in the white water cleaning process (A), the white water W is circulated in the pulp making unit 2, the pulp concentration adjusting unit 3, and the paper making unit 4 only once, but it may be circulated plural times.
(2) In the illustrated preferred embodiment, in the belt cleaning process (B), injection of clean water W by the second injection nozzle device 236 is continued while the mesh belt 105 runs for one revolution, but it may be continued while the belt runs for plural revolutions.
(3) In the illustrated preferred embodiment, the cleaning processes (A) to (C) by the cleaning system CS are executed at the end of one day' s used paper recycling operation of the used paper recycling apparatus 1, but it may be designed to executed at the end of each step of the used paper recycling operation (ordinary operation of pulp making unit 2, pulp concentration adjusting unit 3, and paper making unit 4).
   Moreover, the white water cleaning process (A) may be executed at the end of each used paper recycling operation, and the clean water cleaning processes (B) and (C) may be executed at the end of one day's used paper recycling operation of the used paper recycling apparatus.
(4) In the illustrated preferred embodiment, the white water cleaning process (A), and the clean water cleaning processes (B) and (C) are executed continuously, but these cleaning processes (A), (B), and (C) may be executed independently and appropriate by additional configurations.

As the present invention may be embodied in several forms without departing from the spirit of essential characteristics thereof, the present preferred embodiment is therefore illustrative and not restrictive, since the scope of the present invention is defined by the appended claims rather than by the description preceding them, and all changes that fall within metes and bounds of the claims, or equivalence of such metes and bounds thereof are therefore intended to be embraced by the claims.

## Claims

1. A cleaning method of a used paper recycling apparatus, which comprises, in an apparatus case of furniture size to be installed at the site of origin of the used paper, a pulp making unit for macerating and beating used paper to manufacture used paper pulp, a pulp concentration adjusting unit for adjusting the concentration of the used paper pulp manufactured in the pulp making unit, and a paper making unit for making recycled paper from the used paper pulp adjusted of the concentration in this pulp concentration adjusting unit, for cleaning these apparatus components of the used paper recycling apparatus, comprising:
a white water cleaning process of circulating the white water dewatered and collected in the paper making unit in the apparatus components, and cleaning the apparatus components, and
a clean water cleaning process of cleaning the paper making unit by clean water.

2. The cleaning method of the used paper recycling apparatus of claim 1,
wherein the white water cleaning process is for circulating the white water at least in the pulp making unit and the pulp concentration adjusting unit, and cleaning the pulp making unit and the pulp concentration adjusting unit.

3. The cleaning method of the used paper recycling apparatus of claim 2,
wherein in the white water cleaning process, the white water is circulated, at least once in the pulp making unit and the pulp concentration adjusting unit.

4. The cleaning method of the used paper recycling apparatus of claim 1,
wherein in the white water cleaning process, the white water used in the cleaning process is purified by paper making in the paper making unit, and then discharged.

5. The cleaning method of the used paper recycling apparatus of claim 1,
wherein the clean water cleaning process comprises a pulp supply unit cleaning process for cleaning the pulp supply unit for supplying the used paper pulp from the pulp concentration adjusting unit to the paper making net conveyor of the paper making unit, and a belt cleaning process for cleaning the mesh belt of the paper making-net conveyor.

6. The cleaning method of the used paper recycling apparatus of claim 5,
wherein the pulp supply unit cleaning process is for injecting clean water to an overflow part of an overflow weir of the pulp supply unit by injecting means.

7. The cleaning method of the used paper recycling apparatus of claim 5,
wherein the belt cleaning process is for injecting clean water to the running mesh belt from the back side by injecting means.

8. The cleaning method of the used paper recycling apparatus of claim 7,
wherein the mesh belt is formed as an endless belt rotating and running in a state being suspended and supported in an annular form, and
in the belt cleaning process, the injecting means continues to inject clean water at least during a whole revolution of the mesh belt.

9. The cleaning method of the used paper recycling apparatus of any one of claims 1 to 8,
wherein the white water cleaning process and the clean water cleaning process are executed after completion of each used paper recycling operation.

10. The cleaning method of the used paper recycling apparatus of any one of claims 1 to 8,
wherein the white water cleaning process and the clean water cleaning process are executed after completion of one day' s used paper recycling operation of the used paper recycling apparatus.

11. The cleaning method of the used paper recycling apparatus of any one of claims 1 to 8,
wherein the white water cleaning process is executed after completion of each used paper recycling operation, and the clean water cleaning process is executed after completion of one day's used paper recycling operation of the used paper recycling apparatus.

12. A cleaning system of a used paper recycling apparatus, being a cleaning system applied in a used paper recycling apparatus which comprises, in an apparatus case of furniture size to be installed at the site of origin of the used paper, a pulp making unit for macerating and beating used paper to manufacture used paper pulp, a pulp concentration adjusting unit for adjusting the concentration of the used paper pulp manufactured in the pulp making unit, and a paper making unit for making recycled paper from the used paper pulp adjusted of the concentration in this pulp concentration adjusting unit, for cleaning the apparatus components of this used paper recycling apparatus, comprising:
white water cleaning means for circulating the white water dewatered and collected in the paper making unit in the apparatus components, and cleaning the apparatus components, and
clean water cleaning means for cleaning the paper making unit by clean water.

13. The cleaning system of the used paper recycling apparatus of claim 12,
wherein the white water cleaning means is for circulating the white water at least in the pulp making unit and the pulp concentration adjusting unit, and cleaning the pulp making unit and the pulp concentration adjusting unit.

14. The cleaning system of the used paper recycling apparatus of claim 12,
wherein the white water cleaning means includes a cleaning water supply water source for supplying cleaning water to the pulp making unit, a cleaning water circulation route for returning from the cleaning water supply water source to the supply water source by way of the pulp making unit and the pulp concentration adjusting unit, and a circulation pump provided in the cleaning water circulation route for circulating the cleaning water in the cleaning water circulation route, and
the cleaning water supply water source has a white water collection tank for collecting the white water filtered and dewatered in the paper making unit, and a water supply pump for supplying the white water in the white water collection tank to the pulp making unit as cleaning water.

15. The cleaning system of the used paper recycling apparatus of claim 12,
wherein the clean water cleaning means includes pulp supply unit cleaning means for cleaning the pulp supply unit for supplying the used paper pulp from the pulp concentration adjusting unit to the paper making net conveyor of the paper making unit, and belt cleaning means for cleaning the mesh belt of the paper making net conveyor.

16. The cleaning system of the used paper recycling apparatus of claim 15,
wherein the pulp supply unit cleaning means has first injecting means for injecting clean water to an overflow part of an overflow weir of the pulp supply unit.

17. The cleaning system of the used paper recycling apparatus of claim 15,
wherein the belt cleaning means has second injecting means for injecting clean water to the running mesh belt from the back side.

18. The cleaning system of the used paper recycling apparatus of claim 12, further comprising:
cleaning control unit for controlling the white water cleaning means and the clean water cleaning means by mutual interaction,
wherein this cleaning control unit controls the white water cleaning means and the clean water cleaning means, so as to execute a white water cleaning process for cleaning these apparatus components by circulating the white water dewatered and collected in the paper making unit in the apparatus components, and a clean water cleaning process for cleaning the paper making unit by clean water.

19. A used paper recycling apparatus comprising, in an apparatus case of furniture size, a pulp making unit for manufacturing used paper pulp by macerating and beating used paper, a pulp concentration adjusting unit for adjusting the concentration of the used paper pulp manufactured in the pulp making unit, a paper making unit for making recycled paper from the used paper pulp adjusted of the concentration in this pulp concentration adjusting unit, and a control unit for driving and controlling the pulp making unit and the paper making unit in cooperation, further comprising:
a cleaning system for cleaning these apparatus components of the used paper recycling apparatus,
wherein the cleaning system comprises white water cleaning means for cleaning the apparatus components by circulating the white water dewatered and collected in the paper making unit in the apparatus components, and clean water cleaning means for cleaning the paper making unit by clean water.
